# EUROPÄISCHE PATENTSCHRIFT

(11) **EP 3 462 830 B1**
(45) Veröffentlichungstag und Bekanntmachung des Hinweises auf die Patenterteilung: **16.09.2020**
(21) Anmeldenummer: 17734999.0
(22) Anmeldetag: 06.06.2017
(51) Int. Cl.: A01D 34/135, B21D 53/64

(54) **SCHNEIDELEMENT FÜR OSZILLIERENDE DOPPELMESSER-SCHNEIDSYSTEME**
CUTTING BLADE FOR DOUBLE OSCILLATING BLADE SYSTEM
LAME DE COUPE POUR SYSTÈME À DOUBLES LAMES OSCILLANTES

(30) Priorität: 03.06.2016 DE 102016110338; 10.08.2016 DE 102016114852
(43) Veröffentlichungstag der Anmeldung: 10.04.2019
(73) Patentinhaber: ESM Ennepetaler Schneid- und Mähtechnik Gmbh & Co. KG, 58256 Ennepetal (DE)
(72) Erfinder: NÜRNBERG, Alexander, 58313 Herdecke (DE); OEHLER, Wolfgang, 51688 Wipperfürth (DE)
(74) Vertreter: Patentanwälte Dörner & Kötter PartG mbB
(86) Internationale Anmeldenummer: PCT/EP2017/063727
(87) Internationale Veröffentlichungsnummer: WO 2017/207824

(56) Entgegenhaltungen:
- EP-A1- 1 867 226
- DE-A1- 1 816 316
- DE-A1- 3 813 353
- DE-C- 294 354
- US-A- 1 489 658

## Beschreibung

Die Erfindung betrifft ein oszillierendes Doppelmesser-Schneidsystem umfassend einen Messerrücken, an dem mindestens ein Doppelmesser-Schneidelement befestigt ist, das einen Schneidbereich und einen Befestigungsabschnitt aufweist und im Schneidbereich mit einer Bohrung zur Aufnahme eines Mitnehmerzapfens sowie im Befestigungsabschnitt mit einer Lochung versehen ist, und das eine Sicke aufweist.

Doppelmesser-Schneidsysteme der eingangs genannten Art finden Anwendung, um Halmgüter aller Art wie Grünfutter, Sonderkulturen, Getreide, Gemüse oder dergleichen zu schneiden. Sie finden darüber hinaus Anwendung beim Schnitt von Hecken, Straßenbegleitgrün oder in der Gewässerpflege (Gewässerrändern ebenso wie unter Wasser).

Ein Doppelmesser-Schneidsystem der eingangs genannten Art ist beispielsweise aus der EP1867226 A1 bekannt. Ein weiterer Stand der Technik ist aus der DE3102861 bekannt. Mittels Doppelmesser-Schneidsystemen ist besonders bei nur geringer Antriebsleistung ein optimales Mähergebnis bei gleichzeitig großen Arbeitsbreiten erzielbar. Insbesondere ein sauberer, glatter, erschütterungsarmer Schnitt des Mähgutes zeichnet Doppelmesser-Schneidsysteme aus. Dies ist beispielsweise bei der Gewinnung von sauberem Futter sehr gewünscht und garantiert außerdem nachweislich einen optimalen Wiederaufwuchs des Ernteguts. Schneidelemente für solche Schneidsysteme sind dabei in vielfältiger Weise, bspw. aus der DE 38 13 353 A1 bekannt. Hier sind auch sog. Doppel-Messerklingen offenbart, bei denen zwei Schneidelemente zueinander beabstandet zu einem Bauteil zusammengefasst sind, indem eine nicht lösbare Verbindung zwischen den Elementen im Bereich des Befestigungsabschnitts vorgesehen ist. Die US 1489658 A zeigt einen Distanzabschnitt zwischen dem Schneidbereich und dem Befestigungsabschnitt der Messer der über den Messerücken hervorsteht.

Naturgemäß unterliegen die an den Doppelmesser-Schneidsystemen vorgesehenen Doppelmesser-Schneidelemente kontinuierlichem Verschleiß, der primär die Schneidkanten der Doppelmesser-Schneidelemente abstumpfen lässt. Dieses Abstumpfen der Schneidkanten hat unmittelbaren Einfluss auf das Schneidergebnis. Durch das Abstumpfen kommt es zu einem unsauberen Abschneiden des Schnittgutes und zu einem Quetschen des Schnittgutes zwischen den stumpfen Doppelmesser-Schneidelementen, wodurch der Energiebedarf des Schneidwerks signifikant erhöht und das Arbeitsergebnis nachhaltig negativ beeinflusst wird. Nicht geschliffene Teilbereiche führen zum Quetschen von Schnittgut bzw. zum Abheben von Messern und damit zu einem schlagartigen Schnittverlust!

In der Praxis bedeutet dieser Umstand für den Anwender einen höherer Leistungsbedarf wie auch höhere Laufgeräusche (Vibrationen). Die Antriebsmotordrehzahl muss bei abstumpfenden Schneidelementen deutlich erhöht werden, um das ursprünglich bekannte Schnittergebnis, temporär begrenzt, weiter aufrechtzuerhalten. Dabei wird die Schneidarbeit auf die vorderen Teilbereiche der Schneidkante, also die dem Messerrücken abgewandten und in Fahrtrichtung vorne befindlichen Bereiche der Doppelmesser-Schneidelemente verlagert. Dies hat einen erhöhten Verschleiß an allen beteiligten Komponenten und Maschinen aufgrund des höheren Leistungs- bzw. Drehzahlbedarfes mit erhöhtem Arbeits-, Material- und Kostenaufwand pro Mähsaison zur Folge.

Das vorgenannte Verschleißbild beruht auf unterschiedlichen Ursachen, auf die nachfolgend im Einzelnen eingegangen werden soll:
Aufgrund des Abstumpfens infolge des Verschleißes müssen Doppelmesser-Schneidelemente, in Abhängigkeit von Betriebsstunden und Einsatzhärte, nachgeschliffen werden. Eine diesbezüglich konzeptionell systemimmanente Schwäche der aus dem Stand der Technik bekannten Doppelmesser-Schneidelemente besteht in der Klingengeometrie, die nur eingeschränkte Wartungs- und Nachschleifmöglichkeiten der Doppelmesser-Schneidelemente zulässt. Beim Schleifen der Schneidkanten stellen sich erhebliche Herausforderungen ein, die unmittelbaren Einfluss auf die Funktionalität des jeweilige Doppelmesser-Schneidelements und dessen Schneidqualität haben. Ein wesentliches Problem besteht dabei darin, dass die Klingengeometrie bekannter Doppelmesser-Schneidelemente primär auf die Erfordernisse eines guten Schneidverhaltens abgestimmt ist. Die geometrischen Anforderungen an die Schleifprozesse werden beim derzeitigen Stand der Technik wenig beachtet. Zu berücksichtigen ist dabei, dass das Schleifen der Schneidelemente in an dem Messerücken montiertem Zustand erfolgt. Durch die unzureichende Berücksichtigung der geometrischen Erfordernisse beim Nachschleifen führt das Nachschleifen bei bekannten Doppelmesser-Schneidelementen zwangsläufig zu einer Verringerung der effektiven Schneidkantenlänge, da der Schleifprozess nicht bis unmittelbar an den Messerrücken herangeführt werden kann, obwohl sich die Schneidkanten der Schneidelemente unmittelbar bis zum Messerrücken erstrecken. Dies hat seine Ursache darin, dass ein Sicherheitsabstand erforderlich ist, um die Messerücken, die im Schneidbetrieb dynamisch hoch belastet sind, nicht durch den Schleifprozess zu beschädigen. Zudem bieten die geometrischen Verhältnisse bekannter Doppelmesser-Schneidelemente, insbesondere bei kleineren Klingenteilungen, nicht genügend Freiraum für das Eindringen des Schleifwerkzeugs in den dem Messerrücken zugewandten Teilbereich der Klinge.

Darüber hinaus führen die an den Doppelmesser-Schneidelementen vorgesehenen Mitnehmerzapfen, aufgrund ihres geometrischen Verhältnisses und ihrer Position relativ zur Schneidkante, dazu, dass die Nachschleifzyklen begrenzt sind, bis es zu einer Beschädigung dieser Zapfen durch das Schleifgerät kommt. Beschädigte Mitnehmerzapfen führen zu einer Beeinträchtigung der Messerführung bzw. damit auch des Schnittergebnisses.

Der vorstehende Sachverhalt erweist sich insbesondere deshalb als negativ, da der dem Messerrücken zugewandte, hintere Bereich der Schneidkanten, den am höchsten belasteten Bereich darstellt. Abhängig vom Verhältnis des Kurbelhubs des Doppelmesser-Schneidsystems zum Vorschub des Mähgeräts leistet dieser im hinteren Drittel bis zu 50% der gesamten Schnittarbeit, davon allein 27% im unmittelbar zum Messerrücken benachbarten Bereich. Infolgedessen bestehen für diesen Bereich der Doppelmesser-Schneidelemente sehr hohe Anforderungen in Bezug auf ihre Schnittfähigkeit. Aufgrund des nicht nachgeschliffenen Bereichs müssen andere Teilbereiche der Doppelmesser-Schneidelemente das nicht geschnittene Schnittgut schneiden. Dies führt zu einer weiter erhöhten Belastung der nachgeschliffenen Bereiche, wodurch ein höherer Verschleiß dieser Schnittkanten zu erwarten ist. Darüber hinaus kommt es in den nicht geschliffenen Teilbereichen der Schneidkanten zu einem Quetschen von Schnittgut zwischen den stumpfen Schneidkanten. Dies führt zu einem Abheben der Doppelmesser-Schneidelemente auf Ober- und Untermesser, wodurch auch die nachgeschliffenen Teilbereiche der Doppelmesser-Schneidelemente kein optimales Schneidergebnis erzielen können. Zudem steigt dadurch der Kraftbedarf des Doppelmesser-Schneidwerks, was gleichzeitig zu einer Drückung der Drehzahl des Antriebs führt. Daraus resultiert eine Reduzierung des Verhältnisses von Kurbelhub zu Vorschub. Eine Folge dieser Reduzierung ist die Verlagerung von noch mehr Schnittgut in den dem Messerrücken zugewandten Teilbereich der Klinge, was zu einer weiteren Reduzierung der Drehzahl führt. Im äußersten Fall hat dies einen schlagartigen Anstieg des Schneidleistungsbedarfs des Doppelmesser-Schneidwerks zur Folge, was zu einem Abbruch der Mäharbeiten zwingen kann. Folglich führt das zwingend erforderliche Nachschleifen der Schneidkanten der Doppelmesser-Schneidelemente nicht zu einem Schneidergebnis, welches mit dem Schneidergebnis neuer Schneidelemente erzielbar ist.

Auch erfährt das Doppelmesser-Schneidsystem nach dem ersten Schleifen der Doppelmesser-Schneidelemente eine objektive Standzeiteinbuße gegenüber dem Neuzustand. Die technisch mögliche Standzeit kann, nach dem ersten Schleifen, nicht wieder erreicht werden.

Eine weitere konzeptionell systemimmanente Schwäche, der aus dem Stand der Technik bekannten Doppelmesser-Schneidelemente, ist darin zu sehen, dass die Klingengeometrie keine optimale Auflagefläche der Doppelmesser-Schneidelemente sicherstellt. Die Qualität des Schneidergebnisses hängt aber unmittelbar davon ab, wie gut die Doppelmesser-Schneidelemente des Obermessers auf den Doppelmesser-Schneidelementen des Untermessers aufliegen. Auf die Auflage haben sowohl die Größe der Auflageflächen der Doppelmesser-Schneidelemente, sowie die Klingenteilung, der Messerhub und der Messerandruckpunkt Einfluss. Als Messerandruckpunkt wird der Punkt bezeichnet, an dem die Führungselemente der Doppelmesser-Schneidsysteme an den Doppelmesser-Schneidelementen angreifen. Mit den aus dem Stand der Technik bekannten Klingengeometrien können nur begrenzte Auflageflächen in den verschiedenen Hubpositionen erreicht werden. Bei gleichen Klingenteilungen von Ober- und Untermesser an Doppelmesser-Schneidsysteme liegt zwar zu Beginn eine größere Auflagefläche vor, die jedoch schon nach geringem Hubwechsel einen erheblichen Stützflächenverlust erfährt. Eine Ursache hierfür liegt bei den bekannten Schneidelementen für Doppelmesser-Schneidsysteme in den Sicken der Schneidelemente. Diese beeinflussen maßgeblich die Verringerung der Auflageflächen, welche die Klingen, über den Hubwechsel betrachtet, gegeneinander abstützen. Um diesen negativen Einfluss zu reduzieren, finden Doppelmesser-Schneidsysteme mit gemischter Klingenteilung Anwendung, also Schneidsysteme, bei denen pro Längeneinheit die Anzahl der Doppelmesser-Schneidelemente des Obermessers ungleich der Anzahl der Doppelmesser-Schneidelemente des Untermessers ist. Dies führt im Hubwechsel zu einer verbesserten Auflage, jedoch im Gegenzug zu einer Reduzierung der Schnitteffektivität aufgrund höherer Schubschnittanteile sowie Schnittzonen, in denen die erforderliche Schnittgeschwindigkeit der Schneidelemente unterschritten wird. Mit Schubschnittanteilen ist der Bereich des Schnittguts bezeichnet, welcher zweimal von einer aktiven Schneidkante einer Klinge während des Primärschneidzyklus überstrichen wird bzw. welcher durch eine nicht schneidende, dynamisch oszillierende Oberfläche des Schneidsystems überstrichen geschoben wird bzw. welcher durch eine nicht schneidende, dynamisch oszillierende Oberfläche des Schneidsystems überstrichen geschoben, jedoch im zweiten Teil des Schneidzyklus von einer aktiven Schneidkante geschnitten wird bzw. welcher durch eine stationäre, nicht oszillierende Oberfläche des Schneidsystems geschoben wird bzw. welcher von keiner oszillierenden Oberfläche des Schneidsystems überstrichen wird. Gleichzeitig erhöht sich der Verschleißgrad der Schneidkanten aufgrund einer höheren durchschnittlichen Schneidkantenbelastung über das Schnittgut auf die Klingen, da die komplette Schneidkantenlänge nicht überall dem Schnitt zur Verfügung steht. Zudem ist der Verschleißgrad der Schneidkanten aufgrund niedriger Messergeschwindigkeiten wegen des Abstands zwischen den übereinanderliegenden Doppelmesser-Schneidelementen erhöht. Darüber hinaus entstehen durch mögliche Fluchtungsfehler einzelner Klingen an den Messern Spalte zwischen den im Hub aktiven Schneidkanten, bedingt durch einander aufliegende, benachbarte Klingenbereiche.

Bei den Doppelmesser-Schneidwerken mit gleicher Teilung kommt es zu einem erhöhten Verschleiß im Bereich der Auflagefläche aufgrund des dynamischen Eintauchens der Schneidkanten, was eine reduzierte Standzeit der Doppelmesser-Schneidelemente zur Folge hat. Darüber hinaus führt das wegen des Verschleißes erforderliche Nachschleifen der Schneidkanten der Doppelmesser-Schneidelemente insbesondere in den dem Messerrücken abgewandten, vorderen Bereichen zu einer Verkleinerung der Auflagefläche, was die Neigung zum Eintauchen der Elemente von Ober- und Untermesser zusätzlich verstärkt und einen schnelleren Verschleiß der Doppelmesser-Schneidelemente nach sich zieht.

Insgesamt führen alle vorstehend aufgeführten Kriterien in Summe zu einer Reduzierung der Standzeit sowie einer Verringerung der Schlagkraft der bekannten Doppelmesser-Schneidsysteme. Vor dem Hintergrund des vorstehenden Sachverhalts hat sich die vorliegende Erfindung zur Aufgabe gemacht, ein oszillierendes Doppelmesser-Schneidsystem zu schaffen, bei dem Standzeit und Schlagkraft umfänglich und nachhaltig verbessert sind und gleichzeitig bessere Wartungs- und Nachschleifmöglichkeiten bereitstellt. Gemäß der Erfindung wird diese Aufgabe durch ein oszillierendes Doppelmesser-Schneidsystem gelöst, bei dem zwischen dem Schneidbereich und dem Befestigungsabschnitt ein Distanzabschnitt derart ausgebildet ist, dass der Distanzabschnitt in montiertem Zustand über den Messerrücken in Fahrtrichtung des Mähgerätes um einen Betrag x hervorragt, und an dem Distanzabschnitt im Bereich des Endes der Schneidkanten Vorsprünge ausgebildet sind.

Mit der Erfindung ist ein oszillierendes Doppelmesser-Schneidsystem geschaffen, welches die beim Stand der Technik lediglich eingeschränkten Wartungs- und Nachschleifmöglichkeiten vermeidet. Das erfindungsgemäße Doppelmesser-Schneidelement weist eine Klingengeometrie auf, bei welcher die erforderlichen Schleifprozesse in allen Fällen die gesamte Schneidkante erfassen, und es somit nicht mehr zu einer Reduzierung der effektiven Schneidkantenlänge und den damit verbundenen Nachteilen kommt. Die Sammelstelle ist erfindungsgemäß nicht mehr durch die Vorderkante des Messerrückens gebildet, sondern aufgrund des Distanzabschnitts nach vorne, in den Übergang zwischen Schneidbereich und Distanzabschnitt, verlegt. Die Sammelstelle grenzt direkt an den ersten Teilbereich der Schneidkante an. Sie ist geometrisch so angeordnet, dass ein Schleifen bis zu ihrem Grund mit allen praxisgängigen Schleifverfahren möglich ist. Unvorsichtige oder falsche Schleifprozesse führen somit nicht mehr zu einer strukturellen Beschädigung des Messerrückens, sondern nur zu technisch unbedenklichen Schleifkehlen im Grund der Sammelstelle der Doppelmesser-Schneidelemente. Durch die Vorverlagerung der Sammelstelle ist gleichzeitig der Abstand der Schneidkante zur Position des Mitnehmerzapfens vergrößert, so dass ein Nachschleifen der Doppelmesser-Schneidelemente, um einen größeren Betrag als dies beim Stand der Technik möglich ist, dennoch nicht zu einer Beschädigung der Mitnehmerzapfen führt. Bei den aus dem Stand der Technik bekannten Doppelmesser-Schneidelementen, ist ein Nachschleifen der Klingen mit sonderlangen Mitnehmerzapfen überhaupt nicht möglich, ohne den Zapfen bereits beim Erstschliff zu beschädigen. Durch die Vergrößerung des Abstands der Schneidkante zur Position des Mitnehmerzapfens ist auch das Nachschleifen derart ausgestalteter Doppelmesser-Schneidelemente möglich. Aufgrund der im Vergleich zum Stand der Technik vergrößerten hinteren Auflageflächen mittels des Befestigungsabschnitts der Doppelmesser-Schneidelemente ist die plastische Verformung reduziert. Dadurch kommt es an nicht schneidenden Hinter- und Seitenkanten zu keinen Kollisionen. Das Schleifen bzw. Anprägen dieser Kanten ist nicht mehr nötig.

In Weiterbildung der Erfindung erstreckt sich die Sicke um den benachbarten Bereich der Bohrung. Hierdurch ist ein Doppelmesser-Schneidelement für oszillierende Doppelmesser-Schneidsysteme geschaffen, bei dem die Auflagefläche im Vergleich zu den aus dem Stand der Technik bekannten Doppelmesser-Schneidelementen wesentlich vergrößert ist. Über die dadurch hervorgerufenen druckzentrierten und schleifunabhängigen Auflageflächen weist das Doppelmesser-Schneidelement eine optimierte Messerführung in allen Hubpositionen auf. Hierdurch ist es möglich, Doppelmesser-Schneidwerke mit gleicher Klingenteilung mit deutlich besseren Messerführungseigenschaften auszustatten, als es bei den aus dem Stand der Technik bekannten Doppelmesser-Schneidelementen möglich ist. Die Verkleinerung, als auch die Verlagerung der Sicke relativ zu den Schneidkanten, ermöglicht zudem ein weiteres Zurückschleifen der Schneidkanten, ohne die Schneidkanten aus der Auflagefläche herauszuheben.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die abschnittsweise Draufsicht auf ein Doppelmesser-Schneid-system;
- Figur 2: die perspektivische Darstellung des in Figur 1 dargestellten Doppelmesser-Schneidsystems ;
- Figur 3: die abschnittsweise Draufsicht auf den Messerrücken mit Doppelmesser-Schneidelementen eines Obermessers;
- Figur 4: die vergrößerte Darstellung der Einzelheit "Y" in Figur 3;
- Figur 5: die Darstellung eines Doppelmesser-Schneidelements nach dem Stand der Technik in der Ansicht und im Längsschnitt;
- Figur 6: die Darstellung eines erfindungsgemäßen Doppelmesser-Schneidelements in der Ansicht und im Längsschnitt;
- Figur 7: die perspektivische Darstellung eines erfindungsgemäßen Doppelmesser-Schneidelements in anderer Ausgestaltung;
- Figur 8: die Draufsicht auf das in Figur 7 dargestellte Doppelmesser-Schneidelement;
- Figur 9: die Draufsicht auf ein Doppelmesser-Schneidelement in einer weiteren Ausgestaltung;
- Figur 10: die Draufsicht auf ein Doppelmesser-Schneidelement in einer zusätzlichen Ausgestaltung;
- Figur 11: die Draufsicht auf ein Doppelmesser-Schneidelement in einer geänderten Ausgestaltung;
- Figur 12: die Draufsicht auf ein Doppelmesser-Schneidelement in einer weiteren Ausgestaltung.

Das als Ausführungsbeispiel gewählte Doppelmesser-Schneidsystem besteht aus einem Balkenrücken 1 an dem ein Messerrücken 2 für ein Obermesser und ein Messerrücken 2' für ein Untermesser angeordnet sind. An dem Messerrücken 2 für das Obermesser ist eine Vielzahl von Doppelmesser-Schneidelementen 3 befestigt; an dem Messerrücken 2' für das Untermesser ist eine Vielzahl von Doppelmesser-Schneidelementen 4 angeordnet. Die Doppelmesser-Schneidelemente 3 und 4 sind mittels Befestigungsmitteln 5 an den Messerrücken befestigt.

An dem Balkenrücken 1 sind Messerführungen 10 für das Obermesser und Messerführungen 110 für das Untermesser befestigt. Die Messerführungen 10, 110 umfassen Führungsarme 11, 111. An den freien Enden der Führungsarme 11, 111 sind Buchsen 12 vorgesehen, die mit Führungszapfen an den Doppelmesser-Schneidelementen 3, 4 zusammenwirken. Die Führungsarme 11 weisen Federeigenschaften auf, wodurch das Obermesser mit seinen Schneidelementen 3 gegen das Untermesser mit seinen Schneidelementen 4 gedrückt wird.

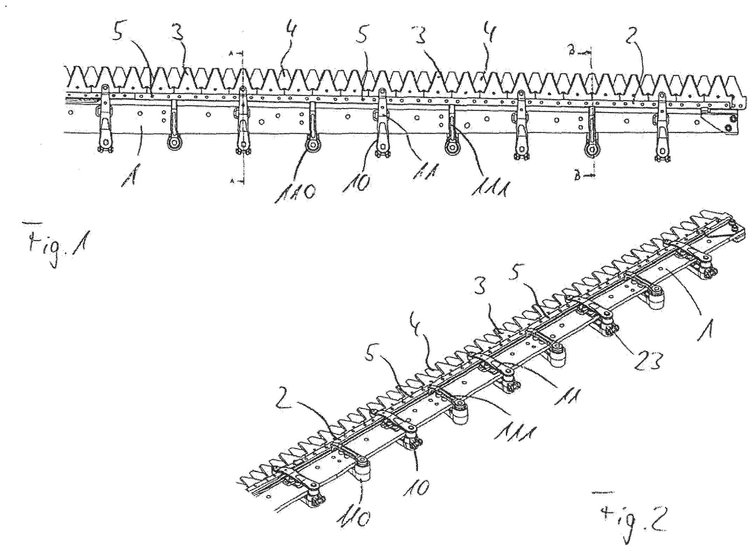

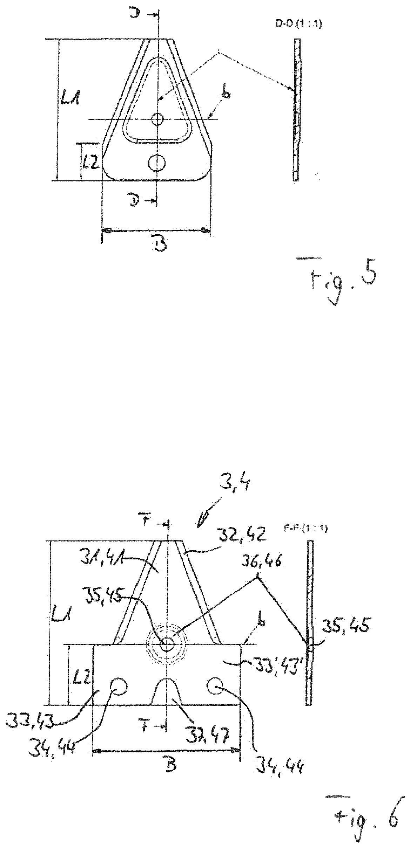

Die Doppelmesser-Schneidelemente 3, 4 weisen einen im Wesentlichen dreieckförmigen Schneidbereich 31, 41 auf. Der Schneidbereich 31, 41 ist an zwei Seiten mit Schneidkanten 32, 42 versehen. Die Schneidkanten 32, 42 sind im Ausführungsbeispiel glatt ausgeführt; in Abwandlung der Ausführungsbeispiele können die Schneidkanten 32, 42 auch gezahnt ausgebildet sein. Die Doppelmesser-Schneidelemente 3, 4 weisen einen Befestigungsabschnitt 33, 43 auf, der in den Ausführungsbeispielen nach den Figuren 6 bis 11 eine im Wesentlichen rechteckige Grundform aufweist. Die Breite des Befestigungsabschnitts 33, 43 ist in Abhängigkeit der gewünschten Klingenteilung des Doppelmesser-Schneidwerks wählbar. In montiertem Zustand liegen die zueinander benachbart angeordneten Doppelmesser-Schneidelemente 3, 4 mit ihren Befestigungsabschnitten 33, 43 aneinander an, wie dies in Figur 1 zu erkennen ist. Hierdurch ist unter anderem gewährleistet, dass die Sammelstelle das Schnittgut geschlossen auf die Schneidkanten 32, 42 führt. Zwischen dem Schneidbereich 31, 41 und dem Befestigungsabschnitt 33, 43 ist ein Distanzabschnitt 33', 43' ausgebildet, der in den Ausführungsbeispielen nach den Figuren 6 bis 11 die gleiche Breite wie der Befestigungsabschnitt 33, 43 hat.

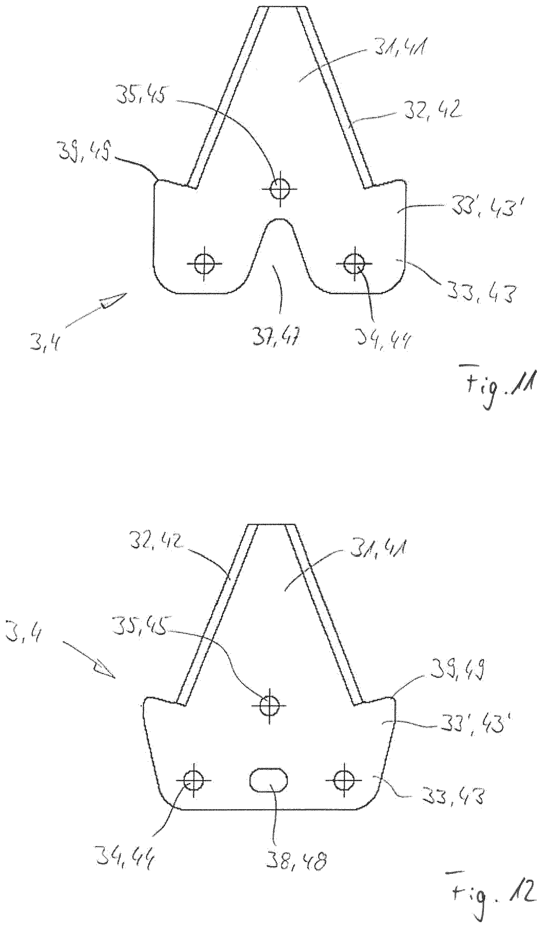

Im Ausführungsbeispiel nach Figur 12 weist der Befestigungsabschnitt 33, 43 mit dem Distanzabschnitt 33', 43' eine im Wesentlichen trapezförmige Ausbildung auf. Ersichtlich befindet sich die breiteste Stelle in dem den Schneidkanten 32, 42 zugewandten Bereich. In montiertem Zustand stoßen in diesem Bereich die benachbart zueinander angeordneten Schneidelemente 3, 4 aneinander. Im Bereich des Befestigungsabschnitts 33, 43 ist dann durch die trapezförmige Ausbildung ein im Wesentlichen V-förmiger Spalt gebildet. Dieser Spalt führt in der im Übrigen flächigen Ausbildung mittels der einander zugewandten Seiten der Doppelmesser-Schneidelemente 3, 4 von Ober- und Untermesser eine künstlich geschaffene Kante herbei, die dazu beiträgt, den Schmutz, der sich im Betrieb ansammelt, aus Ober- und Untermesser auszutreiben.

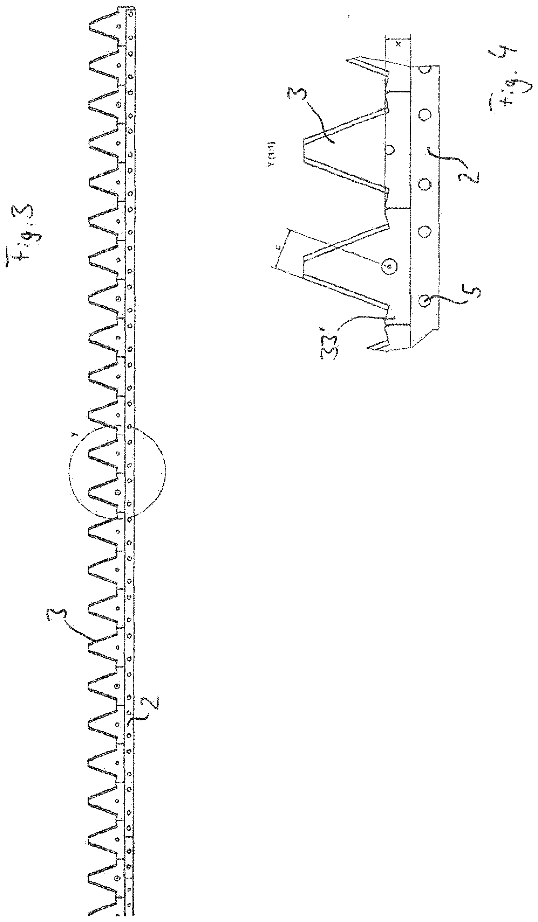

Durch die Ausbildung des Distanzabschnitts 33', 43', welcher in montiertem Zustand über den Messerrücken 2 in Fahrtrichtung des Mähgerätes hervorragt, ist das Ende der Schneidkante bzw. die Sammelstelle in Fahrtrichtung nach vorne und damit vor den Messerrücken 2 verlegt (vgl. Figur 1). In der Darstellung gemäß Figur 4 ist der Betrag der Vorverlagerung der Sammelstelle mit "X" gekennzeichnet, welche der Höhe des Distanzabschnitts 33', 43' entspricht. Infolgedessen ist ein Nachschleifen der Schneidkanten 32, 42 bei an dem Messerrücken 2 befestigten Doppelmesser-Schneidelementen 3, 4 bis an das Ende der Schneidkanten 32, 42 - dem Schneidkantengrund -, welche die Sammelstelle bilden, möglich, ohne Gefahr zu laufen, den Messerrücken 2 hierbei zu beschädigen. Durch die Möglichkeit, die Doppelmesser-Schneidelemente 3, 4 im Bereich der Schneidkanten 32, 42 bis an den Distanzabschnitt 33', 43' heran zu schleifen, und damit die Schneidkanten 32, 42 über ihre gesamte Länge schleifen zu können, sind Standzeiten für die Doppelmesser-Schneidelemente 3, 4 erreichbar, die bis zu 50 % höher sind, als dies bei den aus dem Stand der Technik bekannten Doppelmesser-Schneidelementen nach dem Nachschleifen der Fall ist. Das gleiche gilt auch bei mehreren Schleifvorgängen.

Durch die Möglichkeit, die Schneidkanten 32, 42 über ihre gesamte Länge nachschleifen zu können, ist auch das aus dem Stand der Technik bekannte Quetschen des Schneidgutes insbesondere im Bereich der Sammelstelle vermieden, wodurch sich der Leistungsbedarf des Doppelmesser-Schneidwerks im Vergleich zu fabrikneuen Doppelmesser-Schneidelementen 3, 4 nach dem Nachschleifen nicht verändert. Auch die aus dem Stand der Technik bekannte Drehzahldrückung ist somit verhindert. Durch die Verlagerung der Schneidkanten 32, 42 in Fahrtrichtung des Mähgerätes ist zudem die Gefahr reduziert, dass der Mitnehmerzapfen beim Schleifen beschädigt wird. Dies ist dadurch erreicht, dass die Bohrung 35, 45 für die Aufnahme des Mitnehmerzapfens aus dem Bereich zwischen den Schneidkanten, wie dies beim Stand der Technik der Fall ist (vgl. Figur 5), in den Bereich des Endes der Schneidkanten 32, 42 verlegt ist (vgl. Figuren 6 bis 12). Folglich muss das Schleifgerät beim Schleifen den Zapfen nicht passieren. Vielmehr endet der Schleifvorgang auf Höhe des Zapfens bzw. der Bohrung 35, 45. Durch die Vorverlagerung der Schneidkanten 32, 42 in Fahrtrichtung des Mähgerätes ist der Abstand "c" der Schneidkante zur Position des Mitnehmerzapfens vergrößert (vgl. Figur 4). Auf diese Weise ist ein größerer Betrag des Nachschleifens der Doppelmesser-Schneidelemente als beim Stand der Technik möglich, ohne eine Beschädigung der Mitnehmerzapfen befürchten zu müssen. Auch das Nachschleifen von Doppelmesser-Schneidelementen mit verlängerten Mitnehmerzapfen ist bei den Doppelmesser-Schneidelementen nach der Erfindung daher gefahrlos möglich. Aufgrund der im Verhältnis zu den aus dem Stand der Technik bekannten Doppelmesser-Schneidelementen verbreiterten, nicht schneidenden Befestigungsabschnitte 33, 43 ist auch die Gefahr von Kollisionen der übereinander angeordneten Doppelmesser-Schneidelemente in diesem Bereich reduziert, wodurch das Anfasen bzw. Anprägen auch der nicht schneidenden Bereiche nicht notwendig ist.

Der Vergleich zwischen dem Doppelmesser-Schneidelement nach dem Stand der Technik gemäß Figur 5 und dem erfindungsgemäßen Doppelmesser-Schneidelement gemäß den Figuren 6 bis 12 macht deutlich, dass die Klingenbreite B im Bereich des Befestigungsabschnitts 33, 43 vergrößert ist. Im weiteren ist auch die Länge L2, die den Abstand vom Ende des Schneidelements bis zum Beginn der Schneidkante bezeichnet, bis vor die Druckwirklinie b angehoben, wodurch der Auflagebereich um die Druckwirklinie b zentriert ist. Dadurch verlieren Fluchtungsfehler und Schleifvorgänge ihren negativen Einfluss auf das Schnittergebnis. Die Klingenlänge L1 ist bei dem erfindungsgemäßen Doppelmesser-Schneidelement zur Erhaltung der gleichen Schneidkantenlänge wie bei den Schneidelementen nach dem Stand der Technik ebenso wie die Länge L2 vergrößert. Um Doppelmesser-Schneidwerke mit unterschiedlichen Messerteilungen mit den erfindungsgemäßen Doppelmesser-Schneidelementen abbilden zu können, sind Doppelmesser-Schneidelemente mit unterschiedlicher Breite B erforderlich. Mit dem Doppelmesser-Schneidelement nach der vorliegenden Erfindung besteht die Möglichkeit, eine Basisklingenbreite gemessen an der höchsten Klingenteilung bereit zu stellen und durch ein nachträgliches Abscheren auf ggf. geforderte geringere Klingenbreiten zu bringen.

In den Ausführungsbeispielen sind jeweils Doppelmesser-Schneidelemente mit glatten Schneidkanten 32, 42 dargestellt. In Abwandlung der Ausführungsbeispiele können jedoch auch Doppelmesser-Schneidelemente mit gezahnten der Schneidkanten zur Anwendung kommen. Diese können mit dem erfindungsgemäßen Distanzabschnitt 33', 43' versehen sein, um auch hier eine Vorverlagerung der Schneidbereiche in Fahrtrichtung des Mähgerätes und damit vor den Messerrücken zu bewirken.

In dem Befestigungsabschnitt 33, 43 ist eine Lochung 34, 44 vorgesehen, die zur Befestigung der Doppelmesser-Schneidelemente 3, 4 an dem Messerrücken 2 dient. Die Befestigung erfolgt in üblicher Weise mittels Nieten. Unmittelbar am Übergang zwischen dem Doppelmesser-Schneidbereich 31, 41 und den Distanzabschnitt 33', 43' ist eine Bohrung 35, 45 vorgesehen, die zur Aufnahme des Führungszapfens dient. Die Bohrung 35, 45 ist umgeben von einer Sicke 36, 46, wobei sich die Sicke 36, 46 im Ausführungsbeispiel nach den Figuren 6 bis 10 lediglich um den unmittelbar benachbarten Bereich der Bohrung 35, 45 erstreckt und in diesen Ausführungsbeispielen eine kreisrunde Form aufweist. Andere Formen der Sicke sind ebenfalls möglich, wie beispielsweise Figur 13 erkennen lässt. Bei diesem Ausführungsbeispiel hat die Sicke 36, 46 eine dreieckige Form. Wie der Vergleich des Schneidelements nach dem Stand der Technik gemäß Figur 5 mit den erfindungsgemäßen Schneidelementen nach den Figuren 6, 9 und 10 verdeutlicht, umfasst die Sicke 36, 46 eine kleinere Fläche als die in dem Doppelmesser-Schneidelement nach dem Stand der Technik vorgesehene Sicke, die sich nahezu vollständig über die Fläche des Doppelmesser-Schneidelementes erstreckt.

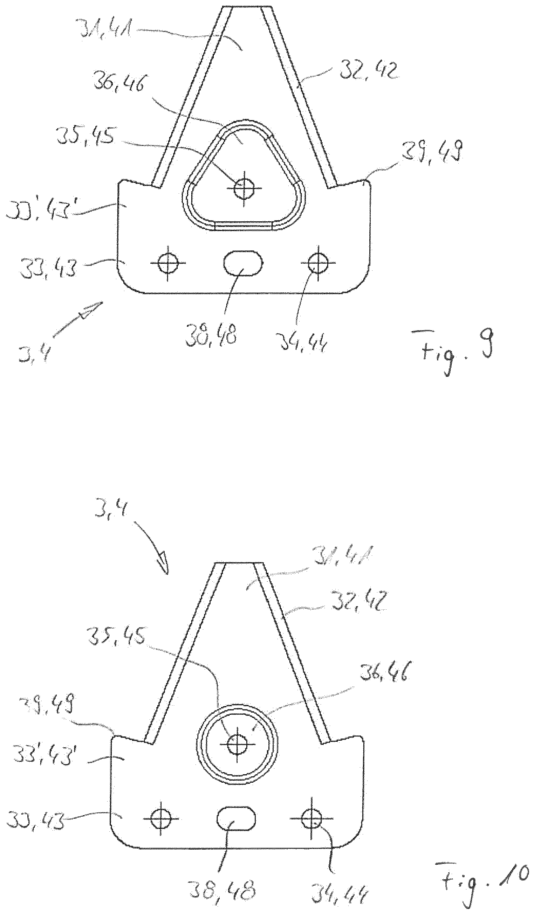

Somit ist eine erhebliche Vergrößerung der Auflagefläche an den erfindungsgemäßen Schneidelementen geschaffen. Die Sicke 35, 45 der erfindungsgemäßen Doppelmesser-Schneidelemente 3, 4 hat dabei in den Ausführungsbeispielen nach den Figuren 6 und 10 lediglich etwa die Größe eines üblichen Kopfdurchmessers eines Senkniets, wie er als Führungszapfen zur Anwendung kommen kann. Durch die Verkleinerung der Sicke 35, 45 sind Auflagebereiche erreicht, auf welche ein Nachschleifen keinen nennenswerten negativen Einfluss mehr hat. Außerdem wird vermieden, dass die Schneidkanten schon nach mehrmaligen Schneidprozessen in eine zur Auflagefläche unterschiedliche Höhenposition verschoben werden. Ein solcher Höhenunterschied hat einen negativen Einfluss auf die Schnittprozesse durch den dadurch entstandenen Schnittspalt sowie die Führungseigenschaften, welche durch erweitertes Eintauchen den Verschleiß der Klingen beschleunigen.

Besonders signifikant vergrößert sich bei der erfindungsgemäßen Ausgestaltung der Doppelmesser-Schneidelemente 3, 4 die Auflagefläche im vorderen Bereich vor der Druckwirklinie b. Da, wie oben ausgeführt, die Qualität des Schneidergebnisses unmittelbar davon abhängt, wie gut die Doppelmesser-Schneidelemente des Obermessers auf den Doppelmesser-Schneidelementen des Untermessers aufliegen, führt die Reduzierung der von der Sicke belegten Fläche auf ein Minimum zu einer wesentlich verbesserten Auflageflächen-Situation in allen Hubpositionen.

Deutlich wird die erzielte Verbesserung anhand eines Vergleichs der erfindungsgemäßen Doppelmesser-Schneidelemente mit den aus dem Stand der Technik bekannten Schneidelementen im Betrieb. Bei einem Doppelmesser-Schneidsystem mit gleicher Teilung liegen in der Ausgangsposition die Schneidelemente 3 und 4 deckungsgleich übereinander. Die Auflagefläche beträgt in diesem Fall bei beiden Arten von Schneidelementen 100%. Bereits bei einem Hub von Ober- zu Untermesser von wenigen Millimetern tritt bei Verwendung der Schneidelemente nach dem Stand der Technik im vorderen Bereich bzw. dem Schneidbereich 31, 41 eine Verringerung der Auflage- bzw. Stützfläche um 50% ein. In der Mittelstellung des Doppelmesser-Schneidsystems kann sich die Auflagefläche kontinuierlich auf bis zu 12% verringern. Diese Werte machen deutlich, dass die bekannten Schneidelemente nicht in der Lage sind, die gewünschte Stützfunktion zu erbringen. Betrachtet man dagegen die Schneidelemente 3, 4 nach der Erfindung wie sie in den Figuren 6 und 10 dargestellt sind in den gleichen Hubpositionen, stellt sich bei einem Hub von Ober- zu Untermesser von wenigen Millimetern im vorderen Bereich eine Verringerung der Auflage- bzw. Stützfläche um lediglich knapp 30% ein. In der Mittelstellung steht noch eine Auflagefläche von mehr als 20% zur Verfügung.

Der vorstehende Vergleich macht deutlich, dass zwar auch bei erfindungsgemäßen Doppelmesser-Schneidelementen naturgemäß aufgrund der grundsätzlich vorgegebenen Geometrie der Schneidelemente die Auflage- bzw. Stützfläche während des Hubvorgangs bis zur Mittelstellung abnimmt. Der Stützflächenverlust ist aber, trotz gleicher Klingenteilungen von Ober- und Untermesser, wesentlich geringer, wodurch dem erhöhten Verschleiß im Bereich der Auflagefläche aufgrund des dynamischen Eintauchens der Schneidkanten entgegengewirkt. Im Verhältnis zu einem Doppelmesser-Schneidsystem mit Schneidelementen nach dem Stand der Technik ermöglicht die Verwendung der erfindungsgemäßen Doppelmesser-Schneidelemente, je nach Sickengröße, eine bis zu über 350% größere, über den Hub gemittelte vordere Auflagefläche bei gleicher Klingenteilung und eine bis zu über 150% größere vordere Auflagefläche in der Mittelstellung im Verhältnis zu Doppelmesser-Schneidsystemen mit gemischter Teilung in der jeweils vergleichbaren Hubposition.

An dem der Spitze des Schneidbereichs 31, 41 abgewandten Ende sind die Doppelmesser-Schneidelemente 3, 4 im Ausführungsbeispiel nach den Figuren 10 und 15 mit einer Ausnehmung 37, 47 versehen. Die Ausnehmung 37, 47 dient der Selbstreinigung der Doppelmesser-Schneidelemente 3, 4. Die Ausnehmungen 37, 47 erzeugen in der sonst flächigen Ausbildung mittels der einander zugewandten Seiten der Doppelmesser-Schneidelemente 3, 4 von Ober- und Untermesser eine künstlich geschaffene Kante, die dazu beiträgt, den Schmutz, der sich im Betrieb ansammelt, aus Ober- und Untermesser auszutreiben.

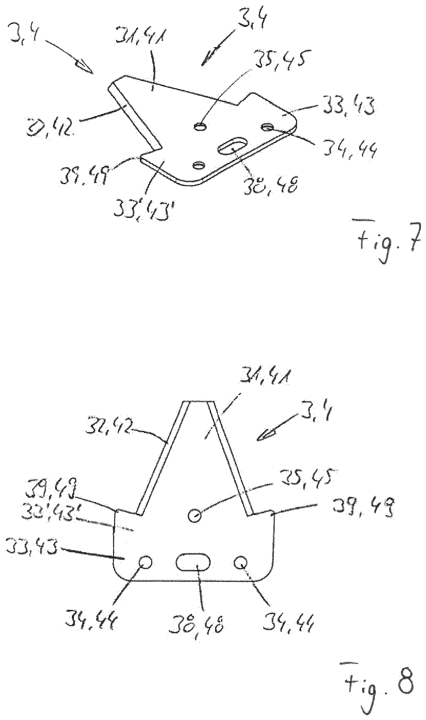

Im Ausführungsbeispiel nach den Figuren 7 bis 10 und 12 ist anstelle einer Ausnehmung 37, 47 ein Langloch 38, 48 vorgesehen. Hierdurch ist unter anderem die Möglichkeit geschaffen, einen Sonderschraubenkopf gegen Verdrehen gesichert verwenden zu können. Darüber hinaus sind in den Ausführungsbeispielen nach den Figuren 7 bis 12 an dem Distanzabschnitt 33', 43' im Bereich der Sammelstelle Vorsprünge 39, 49 ausgebildet. Diese führen eine Art Hinterschnitt herbei, der das Nachschleifen der Schneidkanten 32, 42 erleichtert. Das Schleifgerät kann bei dieser Ausgestaltung in den Hinterschnitt eintauchen und bis zum Fuß der Schneidkanten 32, 42 schleifen. Es ist auf diese Weise in jedem Fall ein Schleifen der gesamten Schneidkantenlänge ohne Gefahr von Beschädigungen gewährleistet. Gleichzeitig fördern die Vorsprünge die Schnittgutzuführung auf die geschärfte Schneide der Schneidelemente. Erfindungsgemäß ist es hierfür ausreichend, wenn entweder die Schneidelemente des Obermessers oder des Untermessers die Vorsprünge aufweisen. Im Übrigen ist es selbstverständlich auch möglich, an dem Schneidelement nach Figur 6 solche Vorsprünge vorzusehen.

Durch die Verkleinerung der Sicken im Verhältnis zu den aus dem Stand der Technik bekannten Doppelmesser-Schneidelementen ist die Auflagefläche zwischen den Doppelmesser-Schneidelementen 3 des Obermessers und den Schneidelementen 4 des Untermessers wesentlich vergrößert. Durch die vergrößerte Auflagefläche sind die Führungseigenschaften der Doppelmesser-Schneidelemente verbessert, wodurch die Schnitteffektivität erhöht ist. Dies gilt insbesondere für Doppelmesser-Schneidwerke mit gleicher Teilung des Ober- und Untermessers. Darüber hinaus ermöglicht die wesentlich kleinere Sicke ein weiteres Zurückschleifen beim Nachschleifen der Schneidkanten 32, 42, ohne diese aus der Auflagefläche herauszuheben, wie dies bei den aus dem Stand der Technik bekannten Doppelmesser-Schneidelementen mit großer Sicke der Fall ist. Folglich sind die erfindungsgemäßen Doppelmesser-Schneidelemente länger einsetzbar, als die bekannten Doppelmesser-Schneidelemente. Die Vergrößerung der Auflagefläche führt zudem zu einer Beruhigung der Doppelmesser-Schneidelemente, was zu einer Reduzierung des dynamischen Eintauchens führt. Dadurch ist die Lebensdauer der Doppelmesser-Schneidelemente vergrößert und die Schlagkraft des Doppelmesser-Schneidwerks verbessert.

Der Einsatz des erfindungsgemäßen Doppelmesser-Schneidelements führt zu einer Verbesserung der Schneideigenschaften bei gleichgeteilten Doppelmesser-Schneidwerken, welche eine Reihe von Vorteilen zu Doppelmesser-Schneidwerken mit unterschiedlichen Teilungen aufweisen. Aufgrund ihrer niedrigeren Schubschnittanteile weisen gleichgeteilte Doppelmesser-Schneidwerke bessere Schnittverhältnisse als gemischt geteilte Doppelmesser-Schneidwerke auf. Außerdem weisen sie im Gegensatz zu geteilten Doppelmesser-Schneidwerken in allen Schnittzonen die gleiche Schnittgeschwindigkeit auf. Ein Quetschen von Schnittgut wird somit effektiv vermieden. Doppelmesser-Schneidwerke mit gleicher Klingenteilung verteilen außerdem das Schnittgut effektiver über die vorhandene Schneidkantenlänge. Dies hat seine Ursache darin, dass die komplette Klingenkantenlänge überall dem Schnitt zur Verfügung steht, was zu einer Reduzierung der Kantenbelastung führt. Das reduzierte dynamische Eintauchen der Klingen führt auch zu einer höheren Lebensdauer und Schlagkraft des Doppelmesser-Schneidwerkes und damit zu einer Reduzierung des Verschleißgrades. Da die Auflageflächen und Schneidkanten immer auf der gleichen Ebene liegen, ist die Sensibilität hinsichtlich Klingenfluchtungsfehlern verringert. Bisher war der Einsatz solcher Doppelmesser-Schneidwerke, mit aus dem Stand der Technik bekannten Schneidelementen, nur begrenzt möglich. Mit den erfindungsgemäßen Doppelmesser-Schneidelementen für oszillierende Doppelmesser-Schneidsysteme ist nun ein deutlich weitreichenderer Einsatz möglich.

## Patentansprüche

1. Oszillierendes Doppelmesser-Schneidsystem umfassend einen Messerrücken (2, 2'), an dem mindestens ein Doppelmesser-Schneidelement (3, 4) befestigt ist, das einen Schneidbereich (31, 41) und einen Befestigungsabschnitt (33, 43) aufweist und im Schneidbereich (31, 41) mit einer Bohrung (35, 45) zur Aufnahme eines Mitnehmerzapfens sowie im Befestigungsabschnitt (33, 43) mit einer Lochung (34, 44) versehen ist, und das eine Sicke (36, 46) aufweist, **dadurch gekennzeichnet, dass** zwischen dem Schneidbereich (31, 41) und dem Befestigungsabschnitt (33, 43) ein Distanzabschnitt (33', 43') derart ausgebildet ist, dass der Distanzabschnitt (33', 43') über den Messerrücken (2) in Fahrtrichtung des Mähgerätes um einen Betrag x hervorragt, und dass an dem Distanzabschnitt (33', 43') im Bereich des Endes der Schneidkanten (32, 42) Vorsprünge (39, 49) ausgebildet sind.

2. Doppelmesser-Schneidsystem nach Anspruch 1, **dadurch gekennzeichnet**, sich die Sicke (36, 46) um den benachbarten Bereich der Bohrung (35, 45) erstreckt

3. Doppelmesser-Schneidsystem nach einem der Ansprüche 1 und 2, **dadurch gekennzeichnet, dass** an dem der Spitze des Schneidbereichs (31, 41) abgewandten Ende eine Ausnehmung (37, 47) vorgesehen ist.

4. Doppelmesser-Schneidsystem nach einem der Ansprüche 1 bis 3, **dadurch gekennzeichnet, dass** der Schneidbereich (31, 41) in dem Distanzabschnitt (33', 43') endet.

5. Doppelmesser-Schneidsystem nach einem der Ansprüche 1 bis 4, **dadurch gekennzeichnet, dass** der Befestigungsabschnitt (33, 43) und der Distanzabschnitt (33', 43') zusammen eine im Wesentlichen rechteckige Grundform aufweisen.

6. Doppelmesser-Schneidsystem nach einem der Ansprüche 1 bis 5, **dadurch gekennzeichnet, dass** der Befestigungsabschnitt (33, 43) und der Distanzabschnitt (33', 43') zusammen eine im Wesentlichen trapezförmige Grundform aufweisen.

## Claims

1. Oscillating double blade cutting system comprising a knife back (2, 2'), to which at least one double blade cutting element (3, 4) is mounted, which has a cutting area (31, 41) and a fastening section (33, 43) and is provided in the cutting area (31, 41) with a bore (35, 45) for receiving a driver pin and is provided in the fastening section (33, 43) with a punch hole (34, 44) and which has a bead (36, 46), **characterised in that** between the cutting area (31, 41) and the fastening section (33, 43) a spacer section (33', 43') is formed in such a manner that the spacer section (33', 43') projects by an amount x beyond the knife back (2) in the driving direction of the mowing device and that projections (39, 49) are formed at the spacer section (33', 43') in the area of the end of the cutting edges (32, 42).

2. Double blade cutting system according to claim 1, **characterised in that** the bead (36, 46) extends around the adjacent region of the bore (35, 45).

3. Double blade cutting system according to one of claims 1 or 2, **characterised in that** at the end facing away from the tip of the cutting area (31, 41) a recess (37, 47) is provided.

4. Double blade cutting system according to one of claims 1 to 3, **characterised in that** the cutting area (31, 41) ends in the spacer section (33', 43').

5. Double blade cutting system according to one of claims 1 to 4, **characterised in that** the fastening section (33, 43) and the spacer section (33', 43') together have a substantially rectangular basic shape.

6. Double blade cutting system according to one of claims 1 to 5, **characterised in that** the fastening section (33, 43) and the spacer section (33', 43') together have a substantially trapezoidal basic shape.

## Revendications

1. Système de coupe à doubles lames oscillantes comprenant un dos (2, 2') de lame contre lequel est fixé au moins un élément de coupe (3, 4) à doubles lames, qui présente une zone de coupe (31, 41) et un segment de fixation (33, 43) et qui est muni, dans la zone de coupe (31, 41), d'un alésage (35, 45) permettant de recevoir un picot entraîneur et qui est muni, dans le segment de fixation (33, 43), de perforations (34, 44), et qui présente un creux (36, 46), **caractérisé en ce qu'**entre la zone de coupe (31, 41) et le segment de fixation (33, 43) est configuré un segment d'écartement (33', 43') de sorte que le segment d'écartement (33', 43') fait saillie d'un quantum x au-dessus du dos (2) de la lame dans la direction de déplacement de l'appareil de fauchage, et **en ce que** contre le segment d'écartement (33', 43'), dans la zone de l'extrémité des arêtes de coupe (32, 42), des saillies (39, 49) sont configurées.

2. Système de coupe à doubles lames selon la revendication 1, **caractérisé en ce que** le creux (36, 46) s'étend autour de la zone voisine de l'alésage (35, 45).

3. Système de coupe à doubles lames selon l'une des revendications 1 et 2, **caractérisé en ce qu'**à l'extrémité ne regardant pas la pointe de la zone de coupe (31, 41) est prévu un évidement (37, 47).

4. Système de coupe à doubles lames selon l'une des revendications 1 à 3, **caractérisé en ce que** la zone de coupe (31, 41) prend fin dans le segment d'écartement (33', 43').

5. Système de coupe à doubles lames selon l'une des revendications 1 à 4, **caractérisé en ce que** le segment de fixation (33, 43) et le segment d'écartement (33', 43') présentent ensemble une forme de base essentiellement rectangulaire.

6. Système de coupe à doubles lames selon l'une des revendications 1 à 5, **caractérisé en ce que** le segment de fixation (33, 43) et le segment d'écartement (33', 43') présentent ensemble une forme de base essentiellement trapézoïdale.
